# EUROPEAN PATENT APPLICATION

(11) **EP 2 526 777 A1**
(43) Date of publication of application: **28.11.2012**
(21) Application number: 11167380.2
(22) Date of filing: 24.05.2011
(51) Int. Cl.: A23B 7/02, A23L 1/212, A23L 3/50, F26B 17/02, F26B 3/08, F26B 21/10

(54) **Device and method for drying vegetable and lettuce leaves**

(71) Applicant: Feltracon B.V., 4152 EM Rhenoy (NL)
(72) Inventor: Van Felius, Jan, 4152 EM, RHENOY (NL)
(74) Representative: Uittenbogaart, Gustaaf Adolf

(57) **Abstract**

The invention concerns a device for drying vegetable and lettuce leaves comprising a first transport belt that is permeable for air with a belt drive, an air circulation system with a dry air nozzle for blowing air through the first transport belt and a hood for sucking the air from the first transport belt, in the air circulation system a ventilator, a cooler and a heater, and a control system for setting the speed of the first transport belt and the speed, temperature and/or humidity of the circulating air.

In accordance with the invention, the dry air nozzle is located under the major length of the first transport belt and the hood is located opposite the dry air nozzle above the first transport belt.

## Description

The invention concerns a device in accordance with the preamble of claim 1. Such devices are known from the prior art. The devices are used for drying vegetable and lettuce leaves after they have been washed and prior to packaging the leaves in small packets. At the start of the drying of the leaves, the leaves are very wet and have much attached water, and near the end of the drying, the leaves are drier and have little attached water. In the known devices, the dry air nozzle and the hood are located at a distance from the first transport belt so that not all circulating air is forced through the leaves on the first transport belt. In order to overcome this disadvantage the device is according to the characterizing part of claim 1. In this way, the leaves are directly in the path of the circulating air and there is no loss of the dry conditioned air but approximately all circulation air comes in contact with the leaves.

In accordance with an embodiment, the device is according to claim 2. In this way, the air flow out of the dry air nozzle is evenly over the whole outflow opening, even if the flow resistance through the leaves on the first transport belt is unevenly distributed.

In accordance with an embodiment, the device is according to claim 3. In this way, the drying conditions can be adapted to the stage of drying as the speed, temperature and humidity of the circulating air for the different first belts can be set at different values, and the speed of the different first transport belts might be different resulting in different thickness of the layers of leaves on the first belt.

In accordance with an embodiment, the device is according to claim 4. In this way, the air circulation system for one first belt is almost without ducts so that there is almost no flow loss, its settings are for that specific first belt, and the first belt moving through the single cabinet can be accessible for cleaning.

In accordance with an embodiment, the device is according to claim 5. In this way, the mechanically driven beater shakes the leaves on the first transport belt to improve the airflow through the leaves.

In accordance with an embodiment, the device is according to claim 6. In this way, first transport belts are stacked above each other and the required floor space is reduced.

In accordance with an embodiment, the device is according to claim 7. In this way, the air at high speed blows loose water from the leaves so that less water needs to evaporate for drying the leaves.

In accordance with an embodiment, the device is according to claim 8. In this way, the suction inlet captures the water blown of the leaves and it does not blow into the surrounding air and so reduces misting the air.

In accordance with an embodiment the device is according to claim 9. In this way, the second blow nozzle blows the leaves pressed against or into the second transport belt by the air from the first blow nozzle loose from the second transport belt.

The invention also concerns a method in accordance with the preamble of claim 10. According to the known method, the wet leaves at the start of drying are dried in the same air as the leaves that are almost dry and this is disadvantageous for the drying process. In order to improve this disadvantage the method is according to claim 10. In this way, the air can be adjusted to the specific progress of drying of the leaves, which improves the drying.

In accordance with an embodiment, the method is according to claim 11. In this way, the drying of the leaves is improved.

Hereafter one or more embodiments illustrate the invention with the aid of a drawing. In the drawing
Figure 1 shows a diagram of a process with a device for drying vegetable and lettuce leaves,
Figure 2 shows a perspective view of an embodiment of a device for drying vegetable and lettuce leaves according to the process shown in figure 1,
Figure 3 shows a front view of the device of figure 2,
Figure 4 shows a schematic side view A and for a part section IV-IV of the device of figure 2, and
Figure 5 shows a schematic cross section of an evaporation cabinet with indications of the heat exchangers.

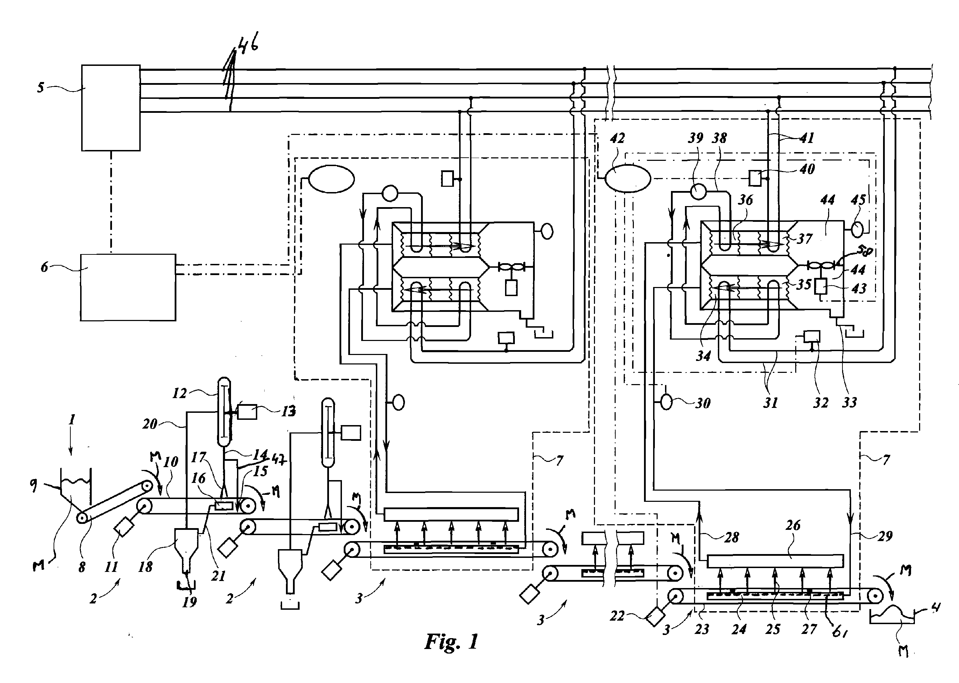

The diagram in figure 1 shows a process in various steps for drying the vegetable and lettuce leaves M that are wet after washing and schematically shows a device designed for this purpose. After delivery from the washing plant (not shown) in the input station 1 the -to be dried- leaves M are temporarily stored in a storage 9 and from there a dosing belt 8 transports the leaves M onto a blow-drying belt 2. The dosing belt 8 is set at such a speed that it deposits a layer of leaves M of approximately 10 to 100 mm thickness on a meshed belt 10 of the blow-drying belt 2. There can be a sequence of several blow-drying belts 2. The meshed belt 10 transports the leaves M through a curtain of a strong downwards directed airflow that blows the water from the leaves. After the blow-drying belts 2 there are at least two evaporation-drying belts 3, one after the other, that include separate evaporation cabinets 7 located around the separate evaporation-drying belts 3, in each evaporation cabinet 7 circulates dry air that causes the water to evaporate from the leaves M.

After drying in the final evaporation cabinet 7, the dried vegetable or lettuce leaves M are temporarily stored in an outlet 4 and later transported for packaging. A refrigerating apparatus 5 provides the several evaporation cabinets 7 with heat and cold required for drying the circulating air. The main control system 6 controls the various devices and controls the installation in such a way that each evaporation cabinet 7 can have drying conditions that differ from the drying conditions of the other evaporation cabinets 7.

For a specific type of leaves M, the condition in the first evaporation cabinet 7 is that the circulating air at reaching the leaves M has a relatively high temperature, for instance 30 to 40°C, and it is very dry. In each following evaporation cabinet 7, the temperature of the circulating air at reaching the leaves M is lower, and in the final evaporation cabinet 7, the temperature is the lowest, for instance 0 to 10°C, so that after leaving the evaporation cabinet 7 the leaves M are cool and are suitable for packaging and storage. It will be clear that the setting of the drying conditions in each evaporation cabinet 7 depends on the type and condition of the leaves M that are to be dried.

The described embodiment includes one or more blow drying-belts 2 and several evaporation-drying belts 3. In another embodiment, there may be only blow drying belts 2 or only evaporation-drying belts 3. The diagram shows several evaporation-drying belts 3 with evaporation cabinets 7, the number of evaporation drying-belts 3 can vary between two and for instance six whereby the control system 6 can set different drying conditions in the different evaporation cabinets 7.

The blow-drying belt 2 comprises the meshed belt 10 tensioned around rollers that are mounted in a frame and a belt drive 11 rotates one of the rollers so that an upper surface of the meshed belt 10 moves from the input station 1 in the direction of the outlet 4. Under the meshed belt 10 is a tray (not shown) for receiving water dripping from the vegetable and lettuce leaves M and the meshed belt 10. Above the upper surface of the meshed belt 10 is a blow nozzle 17 that has the width of the meshed belt 10 and through which air blows at high speed downwards to and through the openings between the leaves M and the openings in the meshed belt 10. Immediately under the upper surface of the meshed belt 10 at the location of the blow nozzle 17 is a suction inlet 16. The suction inlet 16 sucks air in that blows out of the blow nozzle 17 together with water that the air blows off the vegetable and lettuce leaves M lying in a layer on the meshed belt 10. At the end of the upper part of the moving meshed belt 10 the vegetable and lettuce leaves M fall off the meshed belt 10 onto the next belt.

A cleaning nozzle 15 is located above the return part of the meshed belt 10 and blows through the meshed belt 10 to loosen and remove leaves sticking to the underside of the mesh belt 10. A compressed air line 14 connects an air compressor 12 with the blow nozzle 17 and via an air line 47 to the cleaning nozzle 15 and a compressor drive 13 drives the air compressor 12. The air compressor 12 circulates air from the suction inlet 16 through a cyclone inflow 21, a cyclone 18, and a suction line 20 to the blow nozzle 17. The cyclone 18 separates the air/water mixture sucked into the suction inlet 16 and the separated water flows out through a water discharge 19. The circulating air has the temperature of the ambient air. The compressor drive 13 drives the air compressor 12 with a variable speed so that the main control system 6 can set the capacity of the air compressor 12 at different values.

The evaporation-belt 3 comprises a meshed belt 23 looped around rollers mounted in a frame, a belt drive 22 drives one of the rollers. A dry air nozzle 24 is located under the upper part of the meshed belt 23 and a hood 26 is located above the upper part of the meshed belt 23. The dry air nozzle 24 and the hood 26 cover the greater part of the length the upper part of the meshed belt 23. An upwards directed airflow 25 flows through the meshes in the belt 23 and through the leaves M lying on the meshed belt 23 from the dry air nozzle 24 to the hood 26. In an outflow opening of the dry air nozzle 24 is a restriction plate 61 provided with small openings. In the airflow through the outflow opening, the restriction plate 61 creates a slight overpressure over the whole surface of the restriction plate 61 so that through all small openings approximately the same airflow occurs. This airflow is independent from the flow resistance created by the leaves on the meshed belt 23. In the area between the dry air nozzle 24 and the hood 26, a number of beaters 27 can be located under the meshed belt 23. The beaters 27 oscillate the meshed belt 23 upwards to change the relative positions of the leaves to improve the even distribution of the the airflow through the leaves (the blow-drying belts 2 can have similar beaters 27).

The drying air nozzle 24 and the hood 26 are part of the evaporation cabinet 7 and a ventilator 43 with an adjustable circulation capacity creates the air circulation from the dry air nozzle 24 through the meshed belt 23 with the leaves M to the hood 26. From the hood 26, the air flows through a humid air canal 28 to an air pre-cooler 36 and through an air cooler 37 into a condensation chamber 44. The water in the humid air condensates in the condensation chamber 44 and a water discharge 33 discharges the condensated water. In the condensation chamber 44 is a separation wall 58 in which the ventilator 43 is mounted. The ventilator 43 forces the cool air to the lower part of the condensation chamber 44 in which further condensation might take place. From the condensation chamber 44, the cooled air flows to an air pre-heater 35 and an air heater 34. The air heaters 34, 35 heat the air and the heated air flows through a dry air canal 29 to the dry air nozzle 24.

The use of the pre-cooler 36 and the pre-heater 35 reduces the energy requirement for the drying of the humid air as the circulation pump 39 transfers the heat absorbed in the pre-cooler 36 from the humid air through the circulation lines 38 to the pre-heater 35 to the dry air and this requires almost no energy. In other embodiments, this additional equipment is not used.

The cooler 37 cools the circulating air so that the water in the circulating air can condensate in the condensation chamber 44; the temperature in the condensation chamber 44 can be set for instance at approximately 4 degrees Celsius, a temperature sensor 45 measures this temperature and is connected to a cabinet control system 42. The cabinet control system 42 uses the measured temperature to compare this temperature with the set temperature and sets a control valve 40 that controls the circulation of cooling fluid to the cooler 37 through cooling fluid lines 41 connected via fluid lines 46 to the refrigerating apparatus 5.

The heater 34 heats the circulating air to a set value that can be set to a value of 0 to 40 degrees Celsius; a temperature sensor 30 measures the temperature of the air flowing out of the dry air nozzle 24. The cabinet control system 42 uses this measured temperature to set a control valve 32 that controls the circulation of heating fluid through fluid lines 31 connected via the fluid lines 46 to the refrigerating apparatus 5.

The cabinet control system 42 controls other settings of the evaporation cabinet 7 in order to control the temperature and the speed (by setting the speed of the ventilator 43) of the circulating air 25 for the drying of the vegetable and lettuce leaves M on the meshed belt 23. The cabinet control system 42 also controls the speed of the meshed belt 23 by setting the speed of the belt drive 22 in order to influence the thickness of the layer of leaves M on the meshed belt 23. In this way the cabinet control system 42 controls all parameters of the drying process in the evaporation cabinet 7, the main control system 6 controls the settings of the cabinet control systems 42 for each of the evaporation cabinets 7.

In other embodiments of the evaporation cabinets 7 the cooler 37 is an evaporator and/or the heater 34 is a condenser, and through the fluid lines 31, 41 flows gas, or condensed fluid.

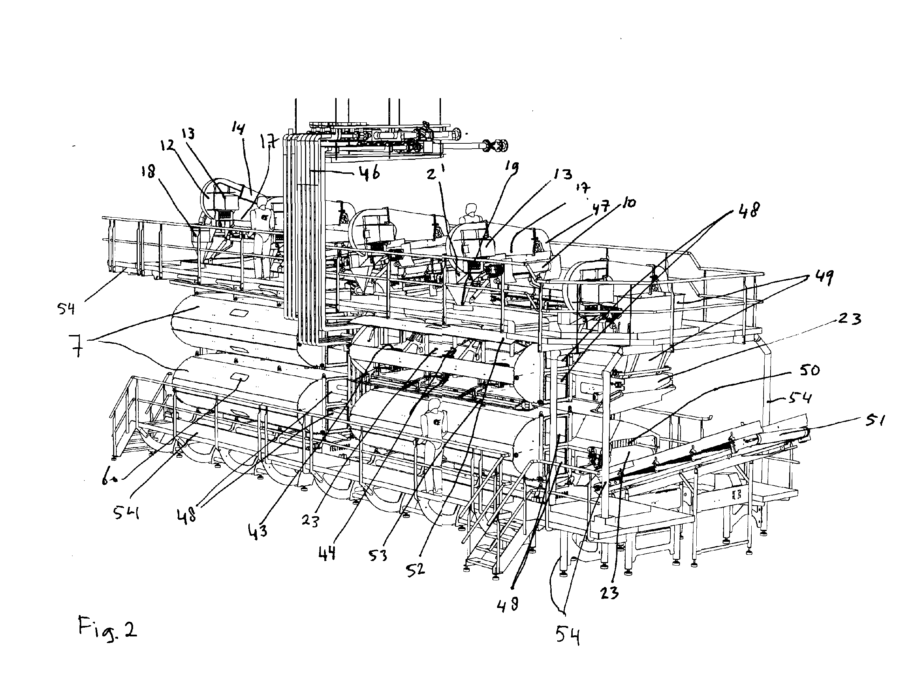

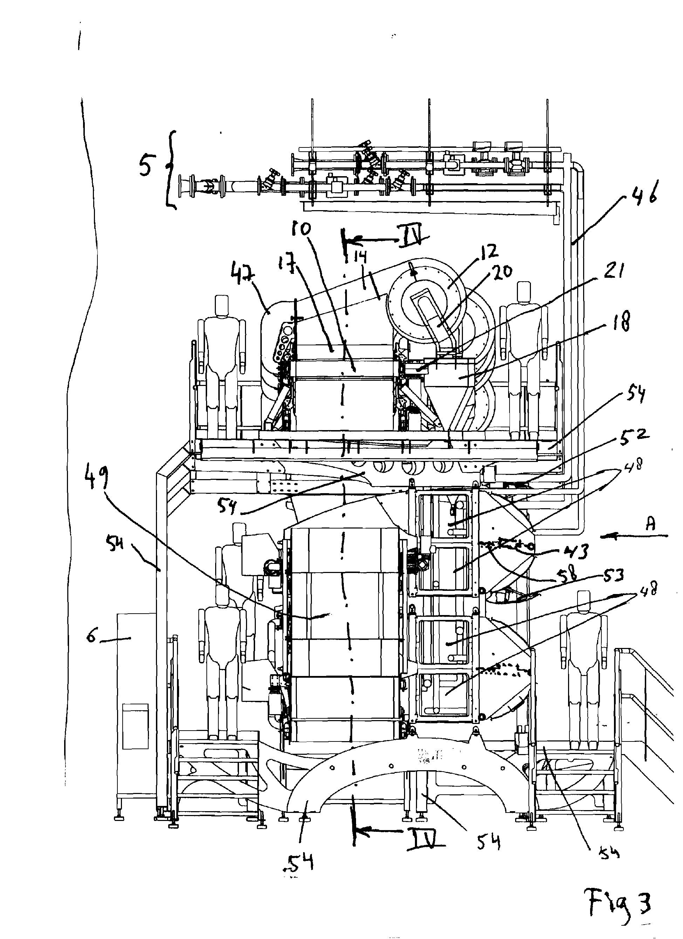

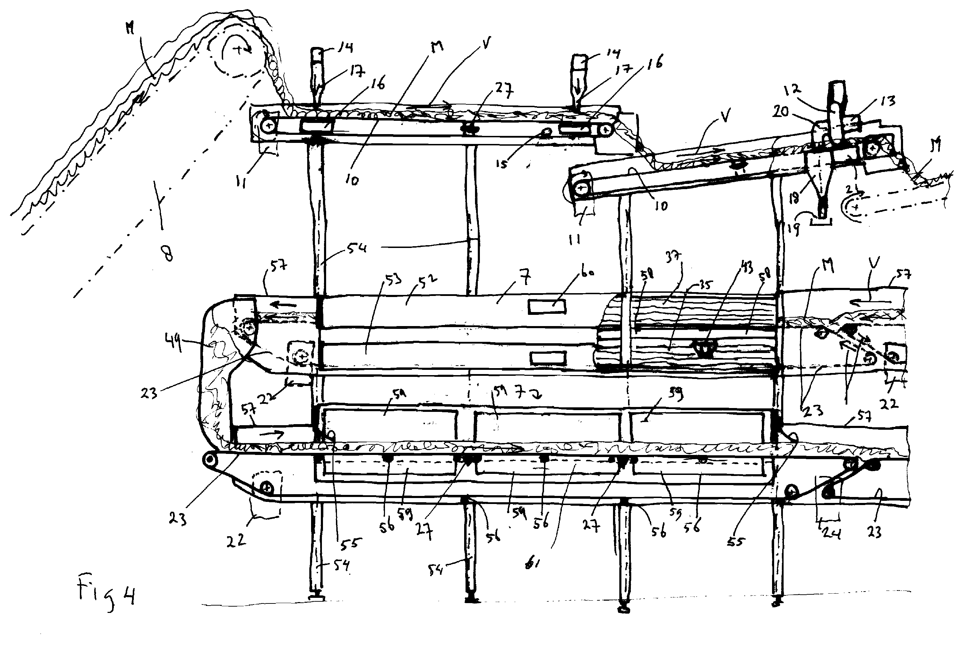

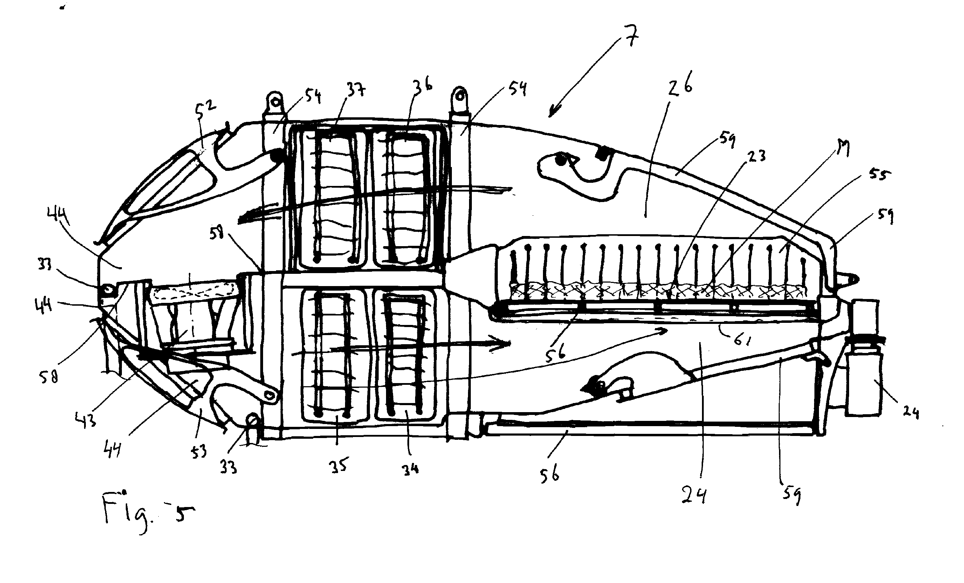

Figures 2 - 5 show an embodiment of a device for drying vegetable or lettuce leaves M according to the process as described in the diagram of figure 1. The similar parts have the same reference numbers as used in explaining the diagram. The figures 2 and 3 show the locations where the heat exchangers 34 - 37 are to be mounted. Figure 4 and 5 show the mounted heat exchangers 34 -37.

The perspective view of figure 2 and the front view of figure 3 shows a frame 54 with three levels. The top level has four blow-dry belts 2, the middle level has two evaporation belts 3 with evaporation cabinets 7, and the lowest level has two evaporation belts 3 with evaporation cabinets 7. In the evaporation cabinets 7, frames 48 indicate the locations where the heat exchangers 34 - 37 are to be mounted. Each evaporation cabinet 7 has a top cover 52 and a bottom cover 53 for access to the condensing chamber 44. In the top cover 52 is a window 60 for checking the condensing in the condensing chamber 44. A vertical duct 49 connects the end of the last blow-dry belt 2 on the top level to the start of the first evaporation belt 3 on the middle level. A similar vertical duct 49 connects the end of the second evaporation belt 3 on the middle level to the start of the third evaporation belt 3 on the lowest level. At the end of the fourth evaporation belt 3 is a discharge belt 51 for transporting the dried leaves M to the outlet 4 (not shown). The fluid lines 46 go upwards and connect to the refrigerating apparatus 5 (not shown).

Figure 4 shows a schematic side view with the top level with the blow-dry belts 2 and the middle level and the lowest level each with two evaporation belts 3 with evaporation cabinets 7. Figure 4 shows the evaporation cabinet 7 in the middle level as a side view with closed top cover 52 and closed bottom cover 53. Part of these covers 52,53 are cut away to show the partitioning wall 58 with ventilator 43, the air cooler 37 and the pre-heater 35. Figure 4 shows the evaporation cabinet 7 in the lowest level as a section through the meshed belt 23 with a side view of the covers 59 in the walls of the evaporation cabinet 7 above and under the meshed belt 23. The evaporation cabinet 7 has flexible curtains 55 that close the side of the cabinet 7 above the meshed belt 23 to guide the circulating air inside the evaporation cabinet 7 and to allow passing of a layer of the leaves M in a transport direction V into and out off the evaporation cabinet 7. Covers 57 enclose the meshed belt 57 to prevent exposure of the leaves M during the evaporation process. The meshed belt 23 has belt supports 56 that support the meshed belt 23 while allowing the circulating air to pass through the belt 23. Under the meshed belt 23 in the evaporation cabinet 7 is the restriction plate 61 that ensures an even upwards airflow 25 through the meshed belt 23.

Figure 5 shows a cross section perpendicular to the transport direction V of the evaporation cabinet 7. As shown in the cross section the area of the surface through which the circulating air flows through the meshed belt 23 is approximately twice the area of the surface through which the air flows through the heat exchangers 34 - 37. The average flow speed of the air through the leaves M generated by the ventilator 43 is between 1 - 3 m/sec to ensure evaporation and loosening leaves M on the meshed belt 23 without blowing the leaves M off the meshed belt 23. The cabinet control system 42 controls the variable capacity of the ventilators 43 in dependence of the type of leaves M that are on the belt 23. The restriction plate 61 in the outflow opening of the dry air nozzle 24 ensures an airflow that is evenly distributed over the major part of the length and over the width of the meshed belt 23. The covers 59 in the dry air nozzle 24 under the upper part of the meshed belt 23 create access in the dry air nozzle 24 in order to remove contaminations and to clean the dry air nozzle 24. The covers 59 in the hood 26 allow access to the meshed belt 23 and the leaves M for inspection and cleaning.

In the described embodiment, a test shows that the vegetable material that arrives at the input station 1 has 21% water on the leaves M (measured as percentage of the weight of the leaves). Drying these leaves M on the blow-dry belts 2 and the four evaporation belts 2 with the evaporation cabinets 7 in the device shown in figure 2 resulted in leaves with 8% water on the leaves M. This required a setting different air temperatures in the different evaporation cabinets 7. In the first evaporation cabinet 7, the air cooler 37 typically cooled the circulating air to a temperature of approximately 4 degrees Celsius so that most water vapour condensed to water in the condensing chamber 44. The air heater 34 then heats the circulating air to 30 - 40 degrees Celsius causing the water on the leaves M to evaporate. In the second and third evaporation cabinet 7, the air heater 34 heats the circulating air to 20 -30 degrees Celsius and to 10 - 20 degrees Celsius respectively. This lower setting of the air temperature is required to limit the heating of the leaves M in combination with maintaining capacity of the circulation air to absorb water vapour. In the final stage, in the last evaporation cabinet 7, the air cooler 37 cools the circulating air as cool as possible without causing the air cooler 37 to freeze and the air heater 34 heats the circulating air to 0 - 10 degrees Celsius so that the leaves M are cooled as much as possible prior to storage and packaging.

Instead of the described flat meshed belts that transport the leaves through the circulating airflows in other embodiments, rotating drums can be used. These rotating drums are from meshed wire and they support the leaves at the inside and transport the leaves with the aid of notches. A hood on the inside of the rotating drum and a blow nozzle at the outside of the rotating drum create the circulating airflow 25 through the leaves M.

## Claims

1. Device for drying vegetable and lettuce leaves comprising a first transport belt (23) that is permeable for air with a belt drive (22), an air circulation system with a dry air nozzle (24) for blowing air (25) through the first transport belt and a hood (26) for sucking the air from the first transport belt, in the air circulation system a ventilator (43), a cooler (36,37) and a heater (34,35), and a control system (6,42) for setting the speed of the first transport belt and the speed, temperature and/or humidity of the circulating air (25), **characterized in that** the dry air nozzle (24) is located under the major length of the first transport belt (23) and the hood (26) is located opposite the dry air nozzle above the first transport belt.

2. Device in accordance with claim 1 wherein the dry air nozzle (24) has an outflow opening with in the outflow opening a restriction plate (61) with small openings evenly spread over the whole surface of the outflow opening.

3. Device in accordance with claim 1 or 2 wherein the device comprises two or more first transport belts (23) located in sequence after each other and each first transport belt has a separately controllable air circulation system and might have a separately controllable belt drive (22).

4. Device in accordance with claim 1, 2 or 3 wherein a cabinet (7) encloses and/or is part of the dry air nozzle (24), the hood (26), the cooler (36,37), a condensing chamber (44) and the heater (34,35) and wherein the cabinet has fixed openings for letting the first transport belt (23) run in and out of the cabinet and can have removable covers (59) for accessing the first transport belt.

5. Device in accordance with one of the preceding claims wherein a mechanically driven beater (27) is located under the upper part of the first transport belt (23) and moves the first transport belt locally upwards.

6. Device in accordance with one of the preceding claims wherein a frame (54) supports the first transport belts (23) in two or more levels.

7. Device in accordance with one of the preceding claims wherein preceding the first transport belts (23), the device comprises a second transport belt (10) with a first blow nozzle (17) that over the width of the upper part of the second transport belt blows air at high speed downwards through the second transport belt.

8. Device in accordance with claim 7 wherein immediately under the upper part of the second transport belt (10) at the location of the first blow nozzle (17) is a suction inlet (16) that is connected to a compressor (12) that feeds the first blow nozzle and wherein a cyclone (18) might be included between the suction inlet and the compressor to separate water from the sucked in air.

9. Device in accordance with claim 7 or 8 wherein a second blow nozzle (15) blows air at high speed over the width of the lower part of the second transport belt (10) downwards through the transport belt.

10. Method for drying vegetable and lettuce leaves comprising transporting the leaves (M) in a layer and blowing air dried in an air drying system upwards through the layer of leaves **characterized in that** the temperature of the air blown through the layer of leaves (M) in the area where the transport starts and the temperature of the air in the area where the transport ends are set at different values and the air temperature in the area where the transport starts might be set higher than the air temperature where the transport ends.

11. Method in accordance with claim 10 wherein the air drying system blows dried air upwards from a dry air nozzle (24) through the layer of leaves (M) to a hood (26) whereby there are several dry air nozzles from which air at different temperatures is blown.
